# EUROPÄISCHE PATENTSCHRIFT

(11) **EP 0 648 664 B1**
(45) Veröffentlichungstag und Bekanntmachung des Hinweises auf die Patenterteilung: **05.03.1997**
(21) Anmeldenummer: 94114017.0
(22) Anmeldetag: 07.09.1994
(51) Int. Cl.: B62D 55/08, B62D 55/10, B62D 55/12, B62D 55/30

(54) **Gleiskettenlaufwerk**
Endless track running gear
Chariot à chenilles

(30) Priorität: 14.10.1993 DE 4335657
(43) Veröffentlichungstag der Anmeldung: 19.04.1995
(73) Patentinhaber: CLAAS Kommanditgesellschaft auf Aktien, 33428 Harsewinkel (DE)
(72) Erfinder: Jennen, Wolfgang, D-33330 Gütersloh (DE)

(56) Entgegenhaltungen:
- DE-B- 1 020 532
- FR-A- 1 571 771
- GB-A- 796 829
- US-A- 4 582 367

## Beschreibung

Die Erfindung betrifft ein Gleiskettenlaufwerk für Fahrzeuge und selbstfahrende Maschinen, Vorzugsweise für landwirtschaftliche Erntemaschinen, die unter schwierigen Bodenverhältnissen, beispielsweise auf gering tragfähigen Böden, eingesetzt werden.

Gegenüber den wesentlich kostengünstigeren Räderlaufwerken haben Gleiskettenlaufwerke den Vorteil, daß sie bei guter Bodenauflage geringe Bodendrücke verursachen und in ihrem Einsatzfeld keine planierte oder befestigte Fahrsohle erfordern. Gleiskettenlaufwerke werden daher vorrangig dort eingesetzt, wo hohe Massegewichte schwerer Fahrzeuge oder Maschinen auf weniger tragfähige Böden übertragen werden müssen oder eine gute und gleichmäßige Bodenhaftung, beispielsweise zur Überwindung eines hügeligen oder bergigen Geländes erforderlich ist. Fahrzeuge und Maschinen, die unter diesen äußeren Bedingungen eingesetzt werden können, sind bereits bei ihrer Konzipierung mit einem an ihrem konstruktiven Aufbau separat angepaßten Gleiskettenlaufwerk ausgestattet.

Die bereits bekannten Gleiskettenlaufwerke der gattungsgemäßen Art besitzen regelmäßig einen mit dem Maschinen- oder Fahrzeugrahmen fest verbundenen verwindungssteifen zentralen Tragrahmen, an dessen Unterseite mehrere, in ihren Halterungen verschwenkbare Stützrollenpaare angelenkt sind, während auf der Oberseite des Tragrahmens in Konsolen gelagerte Stützrollen angeordnet sind - US-PS 4 744 431; SU-PS 882 810 und 765 090. Am vorderen Ende des Tragrahmens ist das Umlenkrad für die Endlosgleiskette vorgesehen, oftmals auch als Umlenkturas bezeichnet, die bei zahlreichen bekannten Ausführungen für ein Gleiskettenlaufwerk von einer Einrichtung zur Einstellung und Veränderung der Gleiskettenspannung aufgenommen wird - DE 3 410 358 A1; DE 2 539 019 C2. Am gegenüberliegenden Ende des Tragrahmens befindet sich das Antriebsrad für die Endlosgleiskette, auch als Antriebsturas bezeichnet, das gegebenenfalls unter Zwischenschaltung eines Kettentriebes oder über Gelenk- oder Kardanwellen direkt mit dem Maschinen- oder Fahrzeugantrieb verbunden ist. Bekannt sind auch bereits Lösungen, bei denen am hinteren Ende jedes Tragrahmens ein Endgetriebe für den Antrieb des Antriebsrades angeflanscht ist, das separat für jedes Antriebsrad von einem Hydromotor oder einem Elektromotor angetrieben wird oder wiederum vermittels Gelenk- oder Kardanwellen mit dem Maschinen- oder Fahrzeugantrieb drehverbunden ist - DE 2 505 040 A1; DE-AS 1 630 930.

Aus der Schrift FR-A-1571 771 ist ein Gleiskettenlaufwerk für Fahrzeuge bekannt, mit je einem am hinteren Ende des Gleiskettenträgers angeflanschten Endgetriebe für den Antrieb des Antriebsrades der Gleiskette, wobei jeder Gleiskettenträger im Bereich seines vorderen Endabschnittes an einen Querträger und über ein am gegenüberliegenden Ende angeflanschtes Endgetriebe an einen zweiten Querträger fest verbunden ist. Parallel zu jedem Gleiskettenträger verläuft eine Gelenkwelle, die antriebsseitig unmittelbar mit einem Hydromotor verbunden ist und die abtriebseitig mit einem Endgetriebe in Verbindung steht.

Aus der DE-OS 2 161 154 ist ein Gleiskettenlaufwerk für eine Raupe mit einem frontseitig aufzunehmenden Arbeitswerkzeug bekannt, deren Laufwerktragrahmen mit längsschubbelastbare Schubkraftübertragungsstangen ausgestattet ist. Diese gleichzeitig als Stützrohr dienende Schubkraftübertragungsstange bildet mit dem Tragrahmen eine konstruktive Einheit und erstreckt sich vom hinteren Ende des Laufwerktragrahmens, an den das Antriebsrad der Endlosgleiskette gelagert ist, zu einem vorderen Mitteltraktorabschnitt, wobei innerhalb der Schubkraftübertragungsstange eine, das Antriebsdrehmoment auf das Antriebsrad übertragende Gelenkwelle verlegt ist. Das in der DE-OS 2 161 154 vorgeschlagene Gleiskettenlaufwerk ist in der Lage, die im Betrieb auftretenden hohen Schub- und Zugkräfte direkt aufzunehmen und zu übertragen. Gleichzeitig werden seitlich an das Arbeitswerkzeug angreifende und nach unten gerichtete Kräfte besser aufgefangen, wodurch sich die Gesamtstabilität der Rahmenkonstruktion und des Gleiskettenfahrzeuges erhöht. Die an den Laufwerktragrahmen zu einer Baueinheit fest angelenkten Schubkraftübertragungsstangen führen jedoch zwangsläufig zu einer kostenmäßigen Mehrbelastung und erfordern außerdem zusätzlichen Bauraum, der oftmals nicht vorhanden ist.

In diesem Zusammenhang muß ferner genannt werden, daß Hohlträger mit innenliegenden Ketten- oder Zahnradantrieben ebenso bekannt sind wie auch in Hohlträgern geführte Hydraulikschläuche.

Aufgabe der Erfindung ist es, ein Gleiskettenlaufwerk der gattungsgemäßen Art so weiterzubilden, daß es ohne großen zusätzlichen Fertigungs- und Montageaufwand an ein für ein Räderlaufwerk konzipiertes Arbeitsgerät oder Fahrzeug einsetzbar und zu dem in der Lage ist, möglichst hohe Drehzahlen von einer gegebenen Antriebsmaschine auf das Endgetriebe der Antriebsräder für die Endlosgleiskette zu übertragen.

Erfindungsgemäß wird die Aufgabe durch die im Anspruch 1 aufgezeigten Merkmale gelöst. Weitere vorteilhafte Ausbildungen der Erfindung ergeben sich aus den Ansprüchen 2 bis 5.

Der ein geschlossenes, kastenförmiges Hohlprofil aufweisende und mit seitlichen Montage- und Serviceöffnungen ausgestattete Gleiskettenträger ist im Bereich seines vorderen Endabschnittes mit der am Maschinen-oder Fahrzeugrahmen befestigten Vorderachse und über das am hinteren Ende an den Gleiskettenträger angeflanschte Gehäuse für ein Endgetriebe mit einer ebenfalls am Maschinen- oder Fahrzeugrahmen befestigten Hinterachse fest verbunden. Zwischen der Vorder- und Hinterachse sind Stabilisatoren in V-förmiger Anordnung angebracht, die in bekannter Weise der Versteifung der gesamten Fahrwerksanordnung dienen. Ebenfalls in seinem vorderen Bereich befindlich ist in jeden Gleiskettenträger ein aus einem Kegelradsatz bestehendes Eingangsgetriebe, das über eine Gelenkwelle mit dem Maschinenantrieb drehfest verbunden ist, eingesetzt. Die Drehbewegung des Maschinenantriebes wird über das Eingangsgetriebe und über eine innerhalb des Hohlprofils des Gleiskettenträgers geführte Welle auf das Endgetriebe übertragen, die Endseitig in entsprechende Lager des Eingangs- und des Endgetriebes gelagert und für die Übertragung möglichst hoher Drehzahlen zur Erreichung eines großen Antriebsdrehmomentes an den Antriebsrädern der Endlosgleiskette als Hohlwelle ausgebildet ist. Durch die vorliegende Antriebsverbindung vom Maschinenantrieb auf die Antriebsräder für die Endlosgleiskette ist sowohl eine relative Verschiebung der Anordnung des linken und rechten Laufwerkes gegenüber dem Maschinenantrieb als auch eine individuelle Anpassung der Anordnung des Maschinenantriebes zum linken und rechten Laufwerk gegeben. Das vorgeschlagene Gleiskettenlaufwerk ist dadurch universell einsetzbar.

Die Endlosgleiskette ist vorzugsweise ein Gummilaufband, das über ein auf einer gemeinsamen Achse angeordnetes Umlenkradpaar und ein Antriebsradpaar geführt wird, wobei die Breite der am Gleiskettenträger gelenkig angebrachten Laufrollen so bemessen ist, daß sich die Laufrollen bis in die Randzone des Gummilaufbandes erstreckt. Dadurch wird neben einer guten Bodenauflage eine möglichst gleichmäßige Belastung des Gummilaufwerkes erzielt.

Die konstruktive Ausbildung des vorgeschlagenen Gleiskettenlaufwerkes erfordert einen relativ kleinen Bauraum und ist ohne großen zusätzlichen Fertigungs- und Montageaufwand anstelle des Räderlaufwerkes eines Fahrzeuges oder einer selbstfahrenden Arbeitsmaschine einsetzbar. Fahrzeuge und selbstfahrende Arbeitsmaschinen, für die ursprünglich ein Räderlaufwerk vorgesehen war, können mit Hilfe der vorgeschlagenen Lösungen auf kostengünstige Weise relativ schnell und einfach mit einem Gleiskettenlaufwerk umgerüstet werden.

Die Erfindung soll nachstehend an einem Ausführungsbeispiel näher erläutert werden. In den dazugehörigen Zeichnungen zeigen:

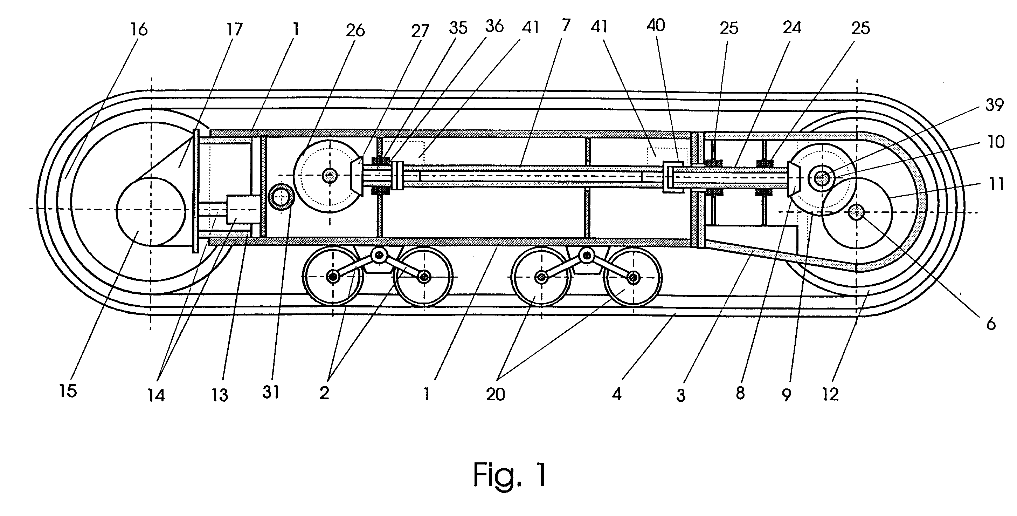

- Fig. 1: die Seitenansicht des schematisch dargestellten Gleiskettenlaufwerkes im Teilschnitt
- Fig. 2: die Draufsicht auf das Gleiskettenlaufwerk

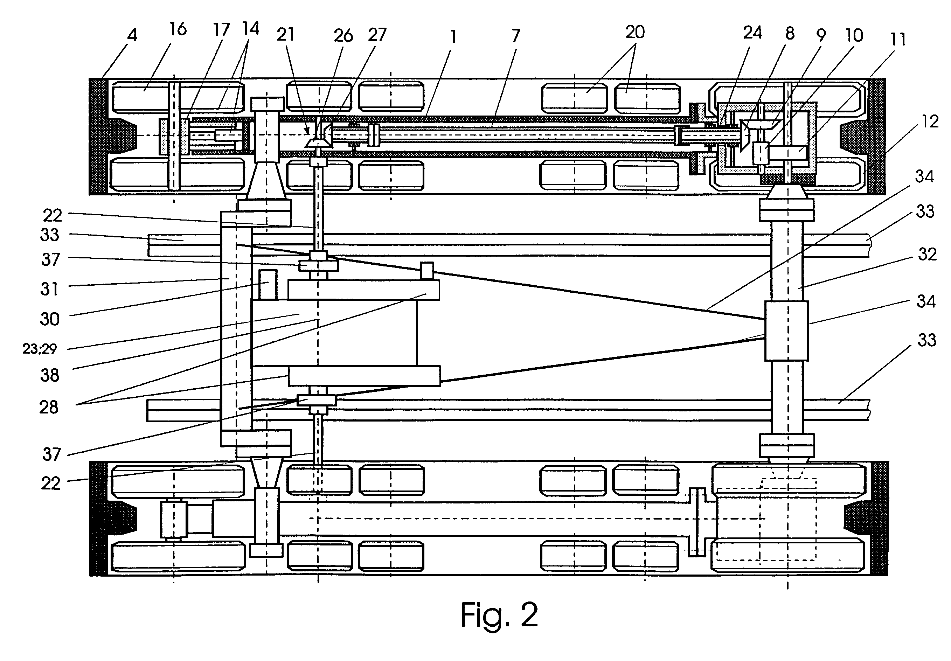

Die beispielsweise das Fahrwerk einer selbstfahrenden Erntemaschine bildenden linken und rechten Gleiskettenlaufwerke - Fig. 2 - besitzen einen zentralen Gleiskettenträger 1, der im Bereich seines vorderen Endabschnittes an einer mit dem Maschinenrahmen 33 fest verbundenen Vorderachse 31 verdrehfest angelenkt und über das Gehäuse eines am gegenüberliegenden Ende des zentralen Gleiskettenträgers 1 angeflanschten Endgetriebes 3 mit einer ebenfalls am Maschinenrahmen 33 befestigten Hinterachse 32 fest verbunden ist. Zwischen der Vorderachse 31 und der Hinterachse 32 sind in V-förmiger Anordnung Stabilisatoren 34 lösbar angebracht, die zusammen mit dem Maschinenrahmen 33 der weiteren Erhöhung der Stabilität des Gleiskettenlaufwerkes dienen. Dadurch können auch quer zur Fahrwerkslängsachse auftretende Schub- und Zugkräfte sicher aufgenommen und auf den Maschinenrahmen 33 und das Fahrwerk übertragen werden.

Der zentrale Gleiskettenträger 1 jedes Gleiskettenlaufwerkes besitzt ein geschlossenes, kastenförmiges Hohlprofil, das mit seitlichen Montage- und Serviceöffnungen 41 ausgestattet ist. Am vorderen Ende des zentralen Gleiskettenträgers 1 ist eine Kettenspanneinrichtung 17 vorgesehen, an der die Drehachse 15 eines Umlenkradpaares 16 für die Endlosgleiskette 4, im vorliegenden Ausführungsbeispiel ein Gummilaufband, fest angeordnet ist. Die Kettenspanneinrichtung 17 besteht aus einem teleskopartig im zentralen Gleiskettenträger 1 angeordneten Profilträger 13 und einem hydraulischen Arbeitszylinder 14, mit dessen Hilfe die Lage des Profilträgers 13 verändert und so die gewünschte Spannung der Gleiskette 4 oder wie im vorliegenden Ausführungsbeispiel, die Spannung des Gummilaufbandes eingestellt und bei Bedarf verändert werden kann.

Ebenfalls im Bereich des vorderen Endabschnittes ist in jeden zentralen Gleiskettenträger 1 des linken und rechten Laufwerkes ein aus Kegelrädern 26; 27 bestehendes Eingangsgetriebe 21 eingesetzt, das über Gelenkwellen 22 mit der Antriebswelle 38 eines kombinierten Getriebes 23, auf der ferner Betriebs-und Feststellbremsen 37 angeordnet sind, verbunden ist. Dieses Getriebe 23 wird aus dem vom Hydromotor 30 angetriebenen Schaltgetriebe 42 und den linken und rechten Lenkdifferentialgetrieben 28 gebildet, die mit dem Schaltgetriebe 23 kinematisch gekoppelt sind und ihrerseits mit dem Hydromotor der Lenkeinrichtung der selbstfahrenden Maschinen in Wirkverbindung stehen - nicht dargestellt.

Zur Übertragung der Antriebsdrehbewegung vom Maschinenantrieb über das Eingangsgetriebe 21 und das am hinteren Ende jedes zentralen Gleiskettenträgers 1 angeflanschte Endgetriebe 3 auf die Antriebsräder 12, die wiederum als Räderpaare ausgebildet sind, ist im Hohlprofil jedes Gleiskettenträgers 1 eine Kardanwelle angeordnet. Die Kardanwelle ist vorzugsweise eine mit endseitigen Anschlußflanschen 40 ausgestattete Hohlwelle 7, an denen mit einem entsprechenden Gegenflansch versehene Lagerzapfen 24;35 lösbar befestigt sind, die in Lager 25;36, die sich jeweils im Getriebegehäuse des Eingangsgetriebes 21 und des Endgetriebes 3 befinden, gelagert sind. Die Ausbildung der Kardanwelle als Hohlwelle 7 und die Lagerung der Welle gewährleisten neben einer wartungsarmen Anordnung und einer kostengünstigen Fertigung und Montage, die Übertragung relativ hoher Antriebsdrehzahlen, wodurch wiederum hohe Antriebsmomente am Antriebsradpaar 12 erreicht werden. Die vom Maschinenantrieb 23 über das Eingangsgetriebe 21 und die Hohlwelle 7 übertragene Drehbewegung wird im Endgetriebe 3 zunächst auf ein Kegelradpaar 8; 9 geleitet, von denen das Kegelrad 9 gemeinsam mit einem Stirnzahnrad 10 auf einer zur Achse 6 des Antriebsradpaares 12 beabstandeten Zwischenwelle 39 angeordnet ist und wird dann über das Stirnrad 10 und das Stirnrad 11 auf die mit dem Antriebsradpaar 12 drehverbundene Achse 6 übertragen. Diese Anordnung gestattet, daß einerseits die Voraussetzung für eine exakte Lagerung der Hohlwelle 7 durch die genau festliegenden Achsabstände zwischen dem auf dem Lagerzapfen 24 angebrachten Kegelrad 8 und dem auf der Zwischenwelle 39 befindlichen Kegelrad 9 gegeben sind und andererseits eventuelle Fertigungstoleranzen durch Lageänderung der Achse 15 zur Zwischenwelle 39 ausgeglichen werden können.

In bekannter Weise befinden sich an der unteren Seite des Gleiskettenträgers 1 mehrere an Pendelstützen 2 drehbar gelagerte Laufrollen 20. Die Pendelstützen 2 sind in fest mit dem Gleisträger 1 verbundenen Konsolen verschwenkbar angeordnet. Die Breite der Laufrollen 20 ist so gewählt, daß sie bis in den Randbereich des Gummilaufbandes hineinreichen, wodurch eine gleichmäßige Bodenauflage und eine gleichmäßigere Belastung des Laufbandes erzielt wird.

### Bezugszeichenaufstellung

- 1: Gleiskettenträger
- 2: Pendelstützen
- 3: Endgetriebe
- 4: Gleiskette
- 5: Eingang
- 6: Achse des Antriebsradpaares
- 7: Hohlwelle
- 8: Kegelrad
- 9: Kegelrad
- 10: Stirnrad
- 11: Stirnrad
- 12: Antriebsradpaar
- 13: Profilträger
- 14: Arbeitszylinder
- 15: Achse des Umlenkradpaares
- 16: Umlenkrad
- 17: Kettenspanneinrichtung
- 18: -
- 19: -
- 20: Laufrollen
- 21: Eingangsgetriebe
- 22: Gelenkwelle
- 23: kombiniertes Getriebe
- 24: Lagerzapfen
- 25: Lager
- 26: Kegelrad
- 27: Kegelrad
- 28: Lenkdifferentialgetriebe
- 29: Schaltgetriebe
- 30: Hydromotor
- 31: Vorderachse
- 32: Hinterachse
- 33: Maschinenrahmen
- 34: Stabilisatoren
- 35: Lagerzapfen
- 36: Lager
- 37: Betriebs-/Feststellbremse
- 38: Antriebswelle
- 39: Zwischenwelle
- 40: Anschlußflansch
- 41: Service-/Montageöffnung
- 42: Schaltgetriebe

## Patentansprüche

1. Gleiskettenlaufwerk für Fahrzeuge und selbstfahrende Maschinen, vorzugsweise für landwirtschaftliche Erntemaschinen, mit je einer am vorderen Ende eines Gleiskettenträgers (1) angeordneten, das Umlenkrad (16) der Endlosgleiskette (4) aufnehmenden Kettenspanneinrichtung (17), wobei in der Längsachse des Gleiskettenträgers (1) ein oder mehrere, um waagerechte Achsen verschwenkbar gelagerte Pendelstützen (2) angelenkt sind, die die drehbar gelagerten Laufrollen (20) der Gleiskette (4) aufnehmen, **dadurch gekennzeichnet,** daß das Gleiskettenlaufwerk ein am hinteren Ende des Gleiskettenträgers (1) angeflanschtes Endetriebe (3) für den Antrieb des Antriebsrades (12) der Gleiskette (4) aufweist, daß jeder Gleiskettenträger (1) ein geschlossenes, Montage- und Serviceöffnungen (41) aufweisendes Hohlprofil besitzt, das im Bereich seines vorderen Endabschnittes an eine Vorderachse (31) und über ein am gegenüberliegenden Ende angeflanschtes Endgetriebe (3) an eine Hinterachse (32), die jeweils mit dem Fahrzeug- bzw. Maschinenrahmen (33) fest verbunden sind, verdrehfest angelenkt ist, und daß in das Hohlprofil jedes Gleiskettenträgers (1) ein Eingangsgetriebe (21), das antriebsseitig mit einem Maschinenantrieb verbunden ist und eine, die Antriebsbewegung auf das Endgetriebe (3) übertragende Hohlwelle (7) angeordnet sind, wobei die Hohlwelle (7) endseitig in Lager (25;36), die im Eingangs- und Endgetriebe (3; 21) vorgesehen sind, gelagert ist.

2. Gleiskettenlaufwerk nach Anspruch 1, **dadurch gekennzeichnet,** daß das Eingangsgetriebe (21) über eine Gelenkwelle (22) mit dem Maschinenantrieb drehverbunden ist.

3. Gleiskettenlaufwerk nach Anspruch 1 und 2, **dadurch gekennzeichnet,** daß das Eingangsgetriebe (21) aus einem Kegelradsatz (26; 27) besteht und der Maschinenantrieb ein kombiniertes Getriebe (23), aus einem Schaltgetriebe (29) und zwei in separaten Getriebegehäusen angeordnete Lenkdifferentialgetriebe (28) mit auf der Antriebswelle (38) angeordneten Betriebs- und Feststellbremsen (37) besitzt, an die die Gelenkwelle (22) angeflanscht ist.

4. Gleiskettenlaufwerk nach einem der Ansprüche 1 bis 3, **dadurch gekennzeichnet,** daß das Endgetriebe (3) aus einem Kegelradsatz (8; 9) und einem Stirnräderpaar (10; 11) besteht, wobei das Kegelrad (9) und das Stirnrad (10) auf einer Zwischenwelle (39), deren Achsabstand zum Lager (25) der Hohlwelle (7) genau festgelegt ist, angeordnet sind und das Stirnrad (11) auf der ein Antriebsradpaar (12) tragenden Achse (6) angebracht ist, deren Lage zur Zwischenwelle (39) veränderbar ist.

5. Gleiskettenlaufwerk nach einem der Ansprüche 1 bis 4, **dadurch gekennzeichnet,** daß die Hohlwelle (7) endseitig angeordnete Anschlußflansche (40) besitzt, an denen mit Gegenflansch Lagerzapfen (24;35), die von den Lagern (25;36) in den Eingangs- und Endgetrieben (21;3) aufgenommen werden, verdrehfest angebracht sind.

6. Gleiskettenlaufwerk nach einem der Ansprüche 1 bis 5, **dadurch gekennzeichnet,** daß das Umlenkrad und das Antriebsrad für die Endlosgleiskette (4) als Radpaare (12;16) ausgebildet und jeweils auf einer gemeinsamen Achse (15;6) angeordnet sind.

7. Gleiskettenlaufwerk nach einem der Ansprüche 1 bis 6, **dadurch gekennzeichnet,** daß die Endlosgleiskette (4) vorzugsweise ein Gummilaufband ist und die Breite der in Längsachse (18) des Gleiskettenträgers (1) an Pendelstützen (2) drehbar gelagerten Laufrollen (20) so gewählt ist, daß sich die Laufrollen (20) bis in die Randzone des Gummilaufbandes erstrecken.

8. Gleiskettenlaufwerk nach einem der Ansprüche 1 bis 7, **dadurch gekennzeichnet,** daß zwischen der Vorder- und Hinterachse (31;32) Stabilisatoren (34) V-förmig angeordnet und lösbar an den Achsen (31; 32) befestigt sind.

## Claims

1. A caterpillar track running gear for vehicles and self-propelled machines, preferably for agricultural harvesters, comprising a respective track tensioning device (17) which is arranged at the front end of a caterpillar track carrier (1) and which carries the idler guide roller (16) of the endless caterpillar track (4), wherein one or more swing supports (2) which are mounted pivotably about horizontal axes and which carry the rotatably mounted tread rollers (20) of the caterpillar track (4) are pivotably mounted on the longitudinal axis of the caterpillar track carrier (1), characterised in that the caterpillar track running gear has a final transmission (3) flange-mounted to the rear end of the caterpillar track carrier (1) for the drive of the drive wheel (12) of the caterpillar track (4), that each caterpillar track carrier (1) has a closed hollow profile which has assembly and service openings (41) and which in the region of its front end portion is non-rotatably mounted to a front axle (31) and by way of a final transmission (3) flange-mounted to the oppositely disposed end, to a rear axle (32), which axles are each fixedly connected to the vehicle or machine frame (33), and that arranged in the hollow profile of each caterpillar track carrier (1) are an input transmission (21) which is connected at the drive side to a machine drive and a hollow shaft (7) which transmits the drive movement to the final transmission (3), wherein the hollow shaft (7) is mounted at its ends in bearings (25; 36) which are provided in the input and final transmissions (3; 21).

2. A caterpillar track running gear according to claim 1 characterised in that the input transmission (21) is rotationally connected to the machine drive by way of a universally jointed shaft (22).

3. A caterpillar track running gear according to claim 1 and claim 2 characterised in that the input transmission (21) comprises a bevel gear assembly (26; 27) and the machine drive has a combined transmission (23) comprising a shift transmission (29) and two steering differential transmissions (28) arranged in separate transmission casings with service and parking brakes (37) which are arranged on the drive shaft (38) and to which the universally jointed shaft (22) is flange-connected.

4. A caterpillar track running gear according to one of claims 1 to 3 characterised in that the final transmission (3) comprises a bevel gear assembly (8; 9) and a spur gear pair (10; 11), wherein the bevel gear (9) and the spur gear (10) are arranged on an intermediate shaft (39), the spacing of the axis of which relative to the bearing (25) of the hollow shaft (7) is precisely fixed, and the spur gear (11) is mounted on an axle (6) which carries the drive gear pair (12) and whose position relative to the intermediate shaft (39) is variable.

5. A caterpillar track running gear according to one of claims 1 to 4 characterised in that the hollow shaft (7) has connecting flanges (40) which are arranged at the ends and to which mounting shaft portions (24; 35) are non-rotatably mounted by co-operating flange means, which mounting shaft portions are supported by the bearings (25; 36) in the input and final transmissions (21; 3).

6. A caterpillar track running gear according to one of claims 1 to 5 characterised in that the idler guide wheel and the drive wheel for the endless caterpillar track (4) are in the form of pairs of wheels (12; 16) and are respectively arranged on a common axle (15; 6).

7. A caterpillar track running gear according to one of claims 1 to 6 characterised in that the endless caterpillar track (4) is preferably a rubber tread and the width of the tread rollers (20) which are rotatably mounted on swing supports (2) on the longitudinal axis (18) of the caterpillar track carrier (1) is so selected that the tread rollers (20) extend into the edge region of the rubber tread.

8. A caterpillar track running gear according to one of claims 1 to 7 characterised in that stabilisers (34) are arranged in a V-shape between the front and rear axles (31; 32) and are releasably fixed to the axles (31; 32).

## Revendications

1. Train de roulement à chenilles destinés à des véhicules et à des machines automotrices, de préférence à des machines agricoles de récolte, comportant à l'extrémité avant d'un longeron (1) de chenille, un dispositif (17) de tension de chenille qui porte la roue de renvoi (16) de la chenille (4) sans fin, un ou plusieurs supports (2) oscillants qui portent les galets de roulement (20) de la chenille (4) montés rotatifs étant montés pivotants autour d'axes horizontaux dans l'axe longitudinal du longeron (1) de chenille, caractérisé par le fait que le train de roulement comporte un réducteur final (3) pour l'entraînement de la roue d'entraînement (12) de la chenille (4) qui est flasqué sur l'extrémité arrière du longeron (1) de chenille, par le fait que chaque longeron (1) de chenille comprend un profilé creux pourvu d'ouvertures (41) de montage et d'entretien qui est monté rigide en torsion, dans la région de son extrémité avant, sur un essieu avant (31) et, à l'extrémité opposée, par un réducteur final (3) flasqué sur un essieu arrière (32), lesquels essieux sont solidaires du châssis de la machine ou du véhicule et par le fait qu'une boîte d'entrée (21) qui est liée côté entrée au groupe moteur de la machine et un arbre creux (7) qui transmet le mouvement d'entraînement du réducteur final (3) sont disposés dans le profilé creux de chaque longeron (1) de chenille, l'arbre creux (7) étant monté au niveau de ses extrémités dans des paliers (25, 36) qui sont prévus dans la boîte d'entrée et le réducteur final (3, 21).

2. Train de roulement à chenilles selon la revendication 1, caractérisé par le fait que la boîte d'entrée (21) est liée en rotation à la au groupe moteur de la machine par l'intermédiaire d'un arbre articulé (22).

3. Train de roulement à chenilles selon les revendications 1 et 2, caractérisé par le fait que la boîte d'entrée (21) se compose d'un jeu de pignons coniques (26, 27) et que le groupe moteur de la machine est une transmission (23) mixte formée d'une boîte de vitesses (29) et de deux différentiels de direction (28) avec des freins de service et d'immobilisation (37) placés sur l'arbre d'entraînement (38) auquel est flasqué l'arbre articulé (22)

4. Train de roulement à chenilles selon une des revendications 1 à 3, caractérisé par le fait que le réducteur final (3) se compose d'un jeu de pignons coniques (8,9) et d'un couple de roues (10, 11) à denture droite, le pignon conique (9) et la roue (10) à denture droite étant montés sur un arbre intermédiaire (39) dont l'entraxe par rapport au palier (25) de l'arbre creux (7) est déterminé avec précision et que la roue (11) à denture droite est montée sur un axe (6) qui porte un couple de roues d'entraînement (12), dont la position, par rapport à l'arbre intermédiaire (39) peut varier.

5. Train de roulement à chenilles selon une des revendication 1 à 4, caractérisé par le fait que l'arbre creux (7) comporte des brides de liaison (40) qui sont disposées aux extrémités et auxquelles sont connectés de manière rigide en torsion des bouts d'arbre (24, 35) montés dans les paliers (25, 36) dans la boîte d'entrée et dans le réducteur final (21, 3).

6. Train de roulement à chenilles selon une des revendication 1 à 5, caractérisé par le fait que la roue de renvoi et la roue d'entraînement de la chenille (4) sont agencées sous forme de couple de roues (12, 16) et sont montées chaque fois sur un axe (15, 6) commun.

7. Train de roulement à chenilles selon une des revendication 1 à 6, caractérisé par le fait que la chenille (4) est de préférence une bande de roulement en caoutchouc et que la largeur des galets de roulement (20) montés rotatifs sur des supports oscillants (2), dans la direction de l'axe longitudinal (18) du longeron (1) de chenille, est choisie telle que les galets de roulement (20) s'étendent jusque dans la zone du bord de la bande de roulement en caoutchouc.

8. Train de roulement à chenilles selon une des revendication 1 à 7, caractérisé par le fait que des stabilisateurs sont disposés en V, entre les essieux avant et arrière (31,32), et sont fixés de manière démontable aux essieux (31, 32).
